# EUROPEAN PATENT APPLICATION

(11) **EP 4 797 775 A1**
(43) Date of publication of application: **26.08.2026**
(21) Application number: 24902418.3
(22) Date of filing: 31.10.2024
(51) Int. Cl.: H04W 24/02, H04L 12/46, H04L 41/0894, H04L 41/0806

(54) **NETWORK PROVISIONING METHOD AND APPARATUS**

(30) Priority: 12.12.2023 CN 202311705621
(71) Applicant: HUAWEI TECHNOLOGIES CO., LTD., Shenzhen, Guangdong 518129 (CN)
(72) Inventor: LIU, Xinxin, Shenzhen, Guangdong 518129 (CN); WANG, Xingjun, Shenzhen, Guangdong 518129 (CN); BAO, Xiaosheng, Shenzhen, Guangdong 518129 (CN)
(74) Representative: Maiwald GmbH
(86) International application number: PCT/CN2024/128897
(87) International publication number: WO 2025/123994

(57) **Abstract**

A network provisioning method and apparatus are disclosed, and relate to the field of network technologies. The method includes: A network device receives a device discovery message sent by a terminal, where the device discovery message indicates the network device to exit a backoff state; when a state of the network device is the backoff state, the network device exits the backoff state based on an indication of the device discovery message; the network device sends device information of the network device to the terminal; and the network device sends registration information to a cloud. The device discovery message indicates the terminal to exit the backoff state. In this way, in a provisioning process, even if there is a network device in the backoff state, the network device exits the backoff state in response to an indication of the device discovery message. This resolves a problem, in related technologies, of provisioning timeout caused by a device in the backoff state during provisioning.

## Description

This application claims priority to Chinese Patent Application No. 202311705621.5, filed on December 12, 2023 and entitled "NETWORK PROVISIONING METHOD AND APPARATUS", which is incorporated herein by reference in its entirety.

### TECHNICAL FIELD

This application relates to the field of network technologies, and in particular, to a network provisioning method and apparatus.

### BACKGROUND

Network provisioning refers to a process of accessing a network through terminals such as a mobile phone after networking is completed and configuring the network to ensure normal network functions.

There is a provisioning method combined with a cloud in related technologies. A procedure of the method includes: A terminal sends a device discovery message to each network device in a network; each network device in the network feeds back device information to the terminal; and each network device in the network sends registration information to the cloud for registration, to complete network provisioning. If registration of a network device fails, the network device enters a backoff state, and does not perform registration within backoff duration (for example, 30 minutes).

If there is a network device in the backoff state in the network during a provisioning operation performed by a user, the network device cannot perform registration after receiving the device discovery message. This causes long waiting time before provisioning and is prone to cause a provisioning failure due to timeout.

### SUMMARY

This application provides a network provisioning method and apparatus, to avoid long waiting time in a provisioning process.

According to a first aspect, this application provides a network provisioning method. The method may be performed by a network device. The method includes: The network device receives a device discovery message sent by a terminal, where the device discovery message indicates the network device to exit a backoff state; when a state of the network device is the backoff state, the network device exits the backoff state based on an indication of the device discovery message; the network device sends device information of the network device to the terminal; and the network device sends registration information to a cloud.

The backoff state is a state in which the network device does not perform registration within backoff duration (for example, 30 minutes) after registration fails.

In this implementation, the device discovery message sent by the terminal to the network device is used for device discovery, so that the network device can send the device information to the terminal after receiving the device discovery message; and the device discovery message further indicates the terminal to exit the backoff state. In this way, in a provisioning process, even if there is a network device in the backoff state, the network device exits the backoff state in response to the indication of the device discovery message. This resolves a problem, in related technologies, of provisioning timeout caused by a device in the backoff state during provisioning.

In an example, the device discovery message is a constrained application protocol (constrained application protocol, CoAP) message. The CoAP message is a lightweight protocol message. Using the CoAP message can save transmission resources, reduce power consumption, and shorten interaction time.

In another example, the device discovery message may alternatively be another protocol message, for example, a user datagram protocol (user datagram protocol, UDP) proprietary protocol message.

When the CoAP message is used as the device discovery message, the CoAP message includes a device type, and the device type is a type of the terminal. The CoAP message whose device type is the type of the terminal indicates the network device to exit the backoff state.

In this implementation, a device type field in the CoAP message is set to the type of the terminal to indicate the network device, so that the network device can exit the backoff state.

For example, the CoAP message may include a header, a token (token), an option (option) field, and a payload (payload). The device type may be carried in the payload.

In an implementation of this application, the device information includes device address information, device serial number information, and device model information.

The device information is fed back to the terminal. In this way, the terminal can subsequently perform a provisioning configuration operation on the network device based on the obtained device information, and the terminal can send the device information to the cloud, so that the cloud can authenticate the network device based on the device information.

In an implementation of this application, the registration information includes device address information, device serial number information, and device model information. Because the terminal has sent, to the terminal, the device information fed back by the network device, the network device may complete authentication and registration by sending, to the cloud, the registration information that is the same as or corresponds to the device information.

In an example, the device address information may be a medium access control address (media access control address, MAC) of the network device. The device serial number information may be an electronic serial number (electronic serial number, ESN). The device model information may include a device vendor, a device type, a device model, and the like.

Optionally, in addition to indicating the network device in the backoff state to exit the backoff state, the device discovery message provided in this embodiment of this application may further indicate the network device in a non-backoff state to shorten backoff duration in the backoff state. Correspondingly, the method may further include:

When the state of the network device is a non-backoff state, the network device updates backoff duration in the backoff state, to shorten the backoff duration when the network device enters the backoff state next time.

Although the device discovery message indicates the network device to exit the backoff state, the network device may fail to perform registration again after exiting the backoff state, and enter the backoff state again. In a process from entering the backoff state again to failing in provisioning due to timeout, the network device no longer receives the device discovery message sent by the terminal, to be specific, the network device cannot exit the backoff state based on the indication of the device discovery message. Therefore, the device discovery message indicates to update the backoff duration, so that the backoff duration is not excessively long even if the network device enters the backoff state again, thereby avoiding provisioning timeout caused by entering the backoff state again.

For example, when the backoff duration is updated, the backoff duration may be updated to 0, to avoid provisioning timeout to the greatest extent.

Optionally, the method may further include: The network device broadcasts a master device query message; when no response from a master device is received within a timeout period, the network device sets the network device as a master device, where the master device is a management device of a network in which the network device is located; and the network device sends information about the master device to the terminal.

The master device is a management device in a provisioning network, and the terminal may control and configure a device in the network by using the master device. A device other than the master device is a slave device or backup device, that is, a managed device.

In related technologies, a master device in provisioning networking is specified. If the specified master device is faulty, devices in the entire network cannot be managed or configured, and a new master device needs to be re-specified manually. In an implementation of this application, the master device is determined through election. In this way, even if the master device is faulty, a new master device can be elected without manual specifying, to improve user experience.

In an example, the master device query message is a CoAP message. The master device query message includes device priority information, and the device priority information is used for master device election.

In this implementation, the CoAP message is used as the master device query message, so that transmission resources can be saved, power consumption can be reduced, and interaction time can be shortened.

In another example, the master device query message may alternatively be another protocol message, for example, a message queuing telemetry transport (message queuing telemetry transport, MQTT) message and/or a hypertext transfer protocol (hypertext transfer protocol, HTTP) message.

Optionally, the method may further include: When a response from the master device is received, the network device periodically receives a heartbeat message sent by the master device; and when no heartbeat message sent by the master device is received within a timeout period, the network device elects a new master device based on a priority of each device in the network.

In this implementation, the master device and another device are maintained by using the heartbeat message. When no heartbeat message is received within a timeout period, it indicates that the master device may be faulty. In this case, the new master device is elected without manual specifying, to improve user experience.

According to a second aspect, this application provides a network provisioning method. The method may be performed by a terminal. The method includes: The terminal broadcasts a device discovery message, where the device discovery message indicates a network device to exit a backoff state; and the terminal receives device information of the network device sent by the network device.

Optionally, the device discovery message is a constrained application protocol CoAP message, the CoAP message includes a device type, and the device type is a type of the terminal.

The CoAP message whose device type is the type of the terminal indicates the network device to exit the backoff state.

Optionally, the device discovery message further indicates the network device to update backoff duration in the backoff state when a state of the network device is a non-backoff state, to shorten the backoff duration when the network device enters the backoff state next time.

According to a third aspect, this application provides a network provisioning apparatus. The apparatus includes:
a receiving unit, configured to receive a device discovery message sent by a terminal, where the device discovery message indicates a network device to exit a backoff state;
a control unit, configured to: when a state of the network device is the backoff state, control, based on the device discovery message, the network device to exit the backoff state; and
a sending unit, configured to send device information of the network device to the terminal, and send registration information to a cloud.

Optionally, the device discovery message is a constrained application protocol CoAP message, the CoAP message includes a device type, and the device type is a type of the terminal.

The CoAP message whose device type is the type of the terminal indicates the network device to exit the backoff state.

Optionally, the control unit is further configured to: when the state of the network device is a non-backoff state, update backoff duration in the backoff state, to shorten the backoff duration when the network device enters the backoff state next time.

Optionally, the sending unit is further configured to broadcast a master device query message;
the control unit is further configured to: when no response from a master device is received within a timeout period, set the network device as a master device, where the master device is a management device of a network in which the network device is located; and
the sending unit is further configured to send information about the master device to the terminal.

Optionally, the master device query message is a CoAP message, the master device query message includes device priority information, and the device priority information is used for master device election.

Optionally, the receiving unit is further configured to: when a response from the master device is received, periodically receive a heartbeat message sent by the master device; and
the control unit is further configured to: when no heartbeat message sent by the master device is received within a timeout period, elect a new master device based on a priority of each device in the network.

According to a fourth aspect, this application provides a network provisioning apparatus. The apparatus includes:
a sending unit, configured to broadcast a device discovery message, where the device discovery message indicates a network device to exit a backoff state; and
a receiving unit, configured to receive device information of the network device sent by the network device.

Optionally, the device discovery message is a constrained application protocol CoAP message, the CoAP message includes a device type, and the device type is a type of a terminal.

The CoAP message whose device type is the type of the terminal indicates the network device to exit the backoff state.

Optionally, the device discovery message further indicates the network device to update backoff duration in the backoff state when a state of the network device is a non-backoff state, to shorten the backoff duration when the network device enters the backoff state next time.

According to a fifth aspect, an electronic device is provided. The electronic device is the foregoing network device or terminal.

The electronic device includes a processor and a memory. The memory is configured to store a software program and a module. The processor runs or executes the software program and/or the module stored in the memory to implement the method in any one of the first aspect or the possible implementations of the first aspect, or implement the method in any one of the second aspect or the possible implementations of the second aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a computer program product is provided. The computer program product includes computer program code. When the computer program code is run by a computer, the computer is caused to perform the method in any one of the first aspect or the possible implementations of the first aspect, or perform the method in any one of the second aspect or the possible implementations of the second aspect.

According to a seventh aspect, this application provides a computer-readable storage medium. The computer-readable storage medium is configured to store program code executed by a processor, and the program code includes instructions used to implement the method in any one of the possible implementations of the first aspect or the method in any one of the second aspect or the possible implementations of the second aspect.

According to an eighth aspect, a chip is provided, including a processor. The processor is configured to invoke, from a memory, instructions stored in the memory and run the instructions, to cause an electronic device in which the chip is installed to perform the method in any one of the possible implementations of the first aspect, or perform the method in any one of the second aspect or the possible implementations of the second aspect.

According to a ninth aspect, another chip is provided. The another chip includes an input interface, an output interface, a processor, and a memory. The input interface, the output interface, the processor, and the memory are connected through an internal connection path. The processor is configured to execute code in the memory, and when the code is executed, the processor is configured to perform the method in any one of the possible implementations of the first aspect, or perform the method in any one of the second aspect or the possible implementations of the second aspect.

According to a tenth aspect, a communication system is provided. The system includes the foregoing network device and terminal.

### BRIEF DESCRIPTION OF DRAWINGS

FIG. 1 is a diagram of a system architecture according to an embodiment of this application;
FIG. 2 is a flowchart of a network provisioning method according to an embodiment of this application;
FIG. 3 is a flowchart of a network provisioning method according to an embodiment of this application;
FIG. 4 is a flowchart of a network provisioning method according to an embodiment of this application;
FIG. 5 is a flowchart of a network provisioning method according to an embodiment of this application;
FIG. 6 is a diagram of a network architecture according to an embodiment of this application;
FIG. 7 is a flowchart of network provisioning according to an embodiment of this application;
FIG. 8 is a diagram of a network architecture according to an embodiment of this application;
FIG. 9 is a flowchart of network provisioning according to an embodiment of this application;
FIG. 10 is a block diagram of a network provisioning apparatus according to an embodiment of this application;
FIG. 11 is a block diagram of a network provisioning apparatus according to an embodiment of this application; and
FIG. 12 is a diagram of a structure of an electronic device according to an embodiment of this application.

### DESCRIPTION OF EMBODIMENTS

To make the objectives, technical solutions, and advantages of this application clearer, the following further describes the implementations of this application in detail with reference to the accompanying drawings.

A network provisioning method provided in this application may be applied to a small office & home office (small office & home office, SOHO) scenario. The SOHO scenario includes micro, small, and medium-sized enterprise offices, stores and supermarkets, warehouses/factories, home decoration and villas, commercial real estates, and the like.

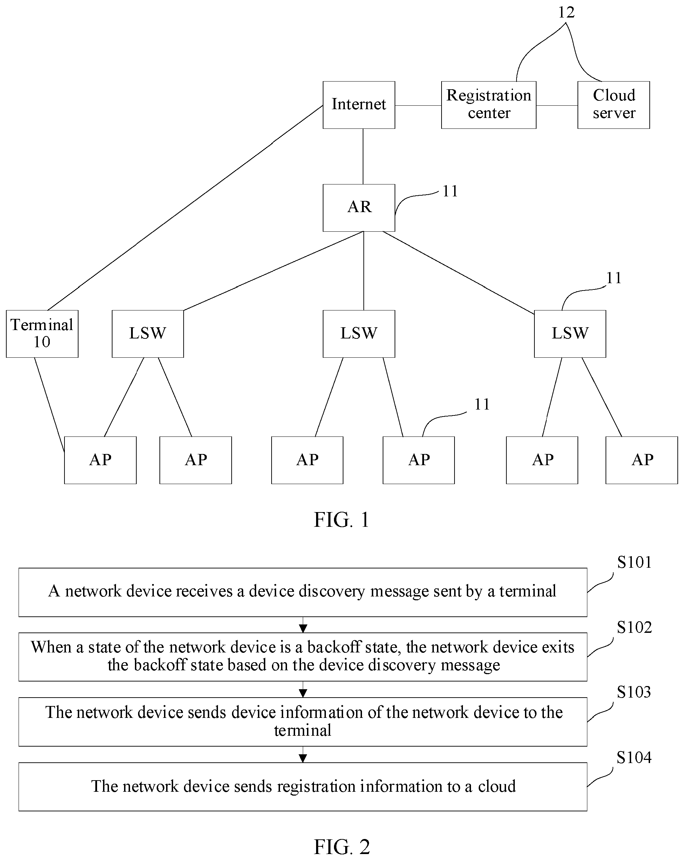

FIG. 1 is a diagram of a system architecture according to an embodiment of this application. Refer to FIG. 1. The system architecture includes a terminal 10, network devices 11, and a cloud 12.

The terminal 10 may be a mobile phone, a tablet, a wearable device, and another intelligent terminal. The system architecture includes a plurality of network devices 11. The plurality of network devices 11 form a network in a SOHO scenario. The plurality of network devices 11 may include an access point (access point, AP) device, a local area network switch (LAN switch, LSW), an access router (access router, AR), and the like. The cloud 12 includes a registration center device and a cloud server (for example, a vendor cloud or an operator cloud).

The terminal 10 may access, in a wireless or wired manner, the network formed by the network devices 11. After the access, network configuration or control may be performed in an application (application, APP) of the terminal 10. The AR may be connected to the cloud 12 through an internet (Internet). The terminal 10 may further access the cloud 12 through the internet. After registering on the cloud 12, each network device 11 may remotely configure or control the network through the cloud 12 in the application of the terminal 10.

During a provisioning operation, the terminal 10 sends a device discovery message to each network device 11; each network device 11 feeds back device information to the terminal 10; the terminal 10 sends the received device information to the cloud 12; each network device 11 sends registration information to the cloud 12 for registration; the cloud 12 authenticates the network device 11 based on the device information sent by the terminal 10; and after the authentication succeeds, the terminal 10 may control the network through the cloud 12 to complete network provisioning. The terminal 10 may send the device information to the registration center, and the registration center synchronizes the device information to the cloud server. During registration, the network device 11 first sends the registration information to the registration center. After authenticating the registration information, the registration center feeds back an address of the cloud server to the network device 11, and the network device 11 implements a cloudification procedure based on the address of the cloud server.

A registration failure may be caused by network issues such as an internet anomaly (for example, a network anomaly on an AR egress side) or a domain name system (domain name system, DNS) anomaly. If registration of a network device 11 fails, the network device 11 enters a backoff state, and does not perform registration within backoff duration (for example, 30 minutes). After entering the backoff state, the network device 11 needs to wait for 30 minutes before re-registration. However, a provisioning failure due to timeout may be caused by the 30 minutes.

FIG. 2 is a flowchart of a network provisioning method according to an embodiment of this application. The method may be performed by the network device shown in FIG. 1. As shown in FIG. 2, the method includes the following steps.

S101: The network device receives a device discovery message sent by a terminal, where the device discovery message indicates the network device to exit a backoff state.

The backoff state is a state in which the network device does not perform registration within backoff duration (for example, 30 minutes) after registration fails.

S102: When a state of the network device is the backoff state, the network device exits the backoff state based on the device discovery message.

S103: The network device sends device information of the network device to the terminal.

After receiving the device information of the network device, the terminal sends the received device information to a cloud.

S104: The network device sends registration information to the cloud.

In this embodiment of this application, the device discovery message sent by the terminal to the network device is used for device discovery, so that the network device can send the device information to the terminal after receiving the device discovery message; and the device discovery message further indicates the terminal to exit the backoff state. In this way, in a provisioning process, even if there is a network device in the backoff state, the network device exits the backoff state in response to an indication of the device discovery message. This resolves a problem, in related technologies, of provisioning timeout caused by a device in the backoff state during provisioning.

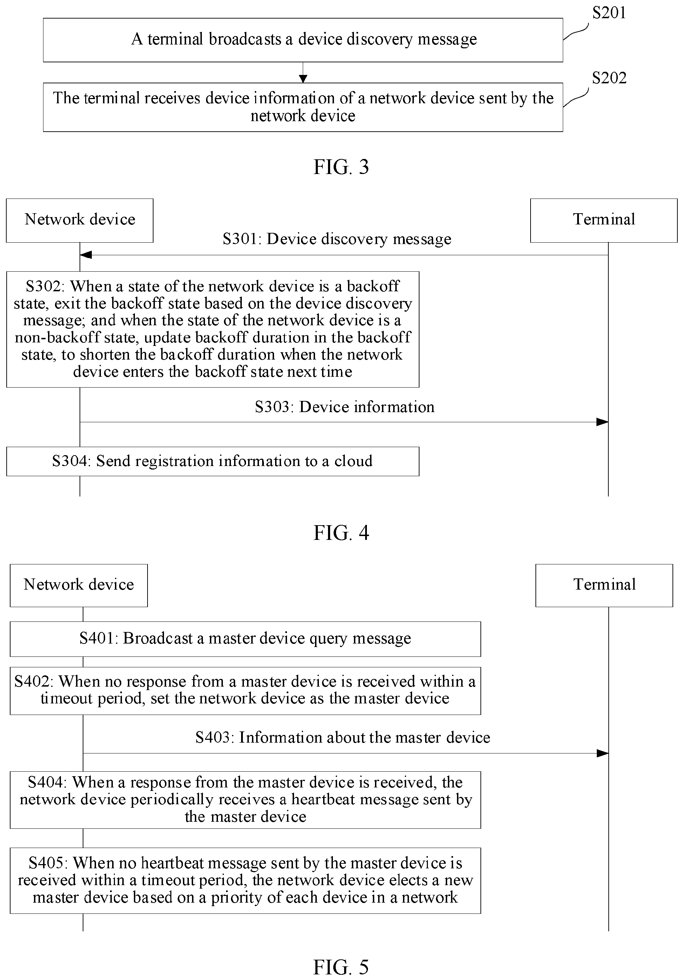

FIG. 3 is a flowchart of a network provisioning method according to an embodiment of this application. The method may be performed by the terminal shown in FIG. 1. As shown in FIG. 3, the method includes the following steps.

S201: The terminal broadcasts a device discovery message, where the device discovery message indicates a network device to exit a backoff state.

S202: The terminal receives device information of the network device sent by the network device.

After receiving the device information of the network device, the terminal sends the received device information to a cloud.

In this embodiment of this application, the device discovery message sent by the terminal to the network device is used for device discovery, so that the network device can send the device information to the terminal after receiving the device discovery message; and the device discovery message further indicates the terminal to exit the backoff state. In this way, in a provisioning process, even if there is a network device in the backoff state, the network device exits the backoff state in response to an indication of the device discovery message. This resolves a problem, in related technologies, of provisioning timeout caused by a device in the backoff state during provisioning.

FIG. 4 is a flowchart of a network provisioning method according to an embodiment of this application. The method may be performed by the network device and the terminal shown in FIG. 1. As shown in FIG. 4, the method includes the following steps.

S301: The terminal broadcasts a device discovery message. The network device receives the device discovery message sent by the terminal.

In addition to indicating the network device in a backoff state to exit the backoff state, the device discovery message provided in this embodiment of this application may further indicate the network device in a non-backoff state to shorten backoff duration in the backoff state.

In an example, the device discovery message is a constrained application protocol CoAP message. The CoAP message is a lightweight protocol message. Using the CoAP message can save transmission resources, reduce power consumption, and shorten interaction time.

In another example, the device discovery message may alternatively be another protocol message, for example, a UDP proprietary protocol message.

When the CoAP message is used as the device discovery message, the CoAP message includes a device type, and the device type is a type of the terminal. The CoAP message whose device type is the type of the terminal indicates the network device to exit the backoff state.

In this implementation, a device type field in the CoAP message is set to the type of the terminal to indicate the network device, so that the network device can exit the backoff state.

For example, the CoAP message may include a header, a token (token), an option (option) field, and a payload (payload). The device type may be carried in the payload.

In the CoAP message, a header length may be 4 bytes; a token length is variable, and the length ranges from 0 bytes to 8 bytes; the option field includes a plurality of type length values (type length value, TLV); and the payload is an optional field.

For example, in response to a provisioning operation, the terminal generates and broadcasts a SOHO device discovery message (soho_device_discover) through an APP used for provisioning. A device type carried in the message is a mobile phone (representing a type of terminal), and is denoted as deviceType (0x50).

In the soho_device_discover message, an option field may include a plurality of options, and the plurality of options may be respectively used to carry a terminal address, a message type (a device discovery type), an encoding format, and the like.

In the soho_device_discover message, a payload may include a plurality of customized fields, which are respectively used to carry a terminal address, a device type, a device priority, and the like.

Different device types may be represented by different values. For example, a device type corresponding to the terminal is a mobile phone, represented by a value 50. Types of other devices such as a switch and an AP are represented by other values.

In this embodiment of this application, when receiving the device discovery message, the network device (for example, the AP or an LSW) copies the device discovery message and sends the device discovery message to a message processing module. The message processing module sends the message to a CoAP protocol processing part. In addition, the network device broadcasts the message to another device in a network.

The CoAP protocol processing part of the message processing module in the network device processes the message, and determines a type of the message based on a device type field and a message type field that are carried in the message. If it is determined, based on the device type field and the message type field, that the message is the device discovery message sent by the terminal, S302 is performed; otherwise, S302 is not performed.

S302: When a state of the network device is the backoff state, the network device exits the backoff state based on the device discovery message. When the state of the network device is a non-backoff state, the network device updates backoff duration in the backoff state, to shorten the backoff duration when the network device enters the backoff state next time.

Although the device discovery message indicates the network device to exit the backoff state, the network device may fail to perform registration again after exiting the backoff state, and enter the backoff state again. In a process from entering the backoff state again to failing in provisioning due to timeout, the network device no longer receives the device discovery message sent by the terminal, to be specific, the network device cannot exit the backoff state based on an indication of the device discovery message. Therefore, the device discovery message indicates to update the backoff duration, so that the backoff duration is not excessively long even if the network device enters the backoff state again, thereby avoiding provisioning timeout caused by entering the backoff state again.

For example, when the backoff duration is updated, the backoff duration may be updated to 0, to avoid provisioning timeout to the greatest extent.

After the backoff duration is updated, if the network device subsequently enters the backoff state again, updated backoff duration is used for calculation.

Optionally, the network device may further restore the backoff duration when a trigger condition is satisfied. The trigger condition herein may be that the registration succeeds, or a quantity of times of sending registration information within a periodicity exceeds a threshold.

S303: The network device sends device information of the network device to the terminal. The terminal receives the device information of the network device sent by the network device.

After receiving the device information of the network device, the terminal sends the received device information to a cloud.

In an implementation of this application, the device information includes device address information, device serial number information, and device model information.

In an example, the device address information may be a MAC address of the network device. The device serial number information may be an ESN. The device model information may include a device vendor, a device type, a device model, and the like.

The device information is fed back to the terminal. In this way, the terminal can subsequently perform a provisioning configuration operation on the network device based on the obtained device information, and the terminal can send the device information to the cloud, so that the cloud can authenticate the network device based on the device information.

The device information may be carried in the CoAP message for sending.

S304: The network device sends registration information to the cloud.

After the network device exits the backoff state, the network device re-triggers a provisioning cloudification procedure on a registration center.

During registration, the network device first sends the registration information to the registration center. After authenticating the registration information, the registration center feeds back an address of a cloud server to the network device, and the network device implements the cloudification procedure based on the address of the cloud server.

In an implementation of this application, the registration information includes device address information, device serial number information, and device model information. Because the terminal has sent, to the terminal, the device information fed back by the network device, the network device may complete authentication and registration by sending, to the cloud, the registration information that is the same as or corresponds to the device information.

An embodiment of this application provides a CoAP message-based cloud management backoff solution. In this solution, for mobile APP provisioning in a SOHO scenario, a device discovery function is integrated into the mobile APP; after accessing a network, the mobile APP broadcasts a CoAP discovery message to the network; and after receiving the CoAP discovery message, a network device identifies a CoAP message type and then exits a backoff state or updates backoff duration. This shortens provisioning time of the mobile APP and improves ease of provisioning.

During provisioning deployment or network configuration in the SOHO scenario, to reduce management complexity of the network device, devices in the entire network need to be managed by using one device in the network, and the management device is also referred to as a master device. The master device needs to have capabilities of discovering, configuring, and operating and maintaining the devices in the entire network. A managed device is referred to as a backup device or a slave device. In related technologies, the master device is statically specified. However, a master device anomaly leads to a loss of a management capability of the entire network. To resolve this problem, this application provides a CoAP-based master election solution.

FIG. 5 is a flowchart of a network provisioning method according to an embodiment of this application. The method may be performed by the network device and the terminal shown in FIG. 1. As shown in FIG. 5, the method includes the following steps.

S401: The network device broadcasts a master device query message.

In an example, the master device query message is a CoAP message. The master device query message includes device priority information, and the device priority information is used for master device election.

In this implementation, the CoAP message is used as the master device query message, so that transmission resources can be saved, power consumption can be reduced, and interaction time can be shortened.

In another example, the master device query message may alternatively be another protocol message, for example, an MQTT message and/or an HTTP message.

For example, the master device query message whose type is the CoAP message includes fields such as message type (iotbus_query_master), device model (deviceModel), device ESN (deviceSn), MAC address (deviceMac), internet protocol (Internet protocol, IP) address (deviceIp), and device priority information (devicePriority). For a format of the master device query message, refer to Table 1 below.

A priority field indicates location priorities of devices AP, LSW, and AR in a network in ascending order. A device having a higher priority is more likely to be elected as a master device during master device election.

**Table 1**

| Location in a message | Field | Meaning | Optional item in a payload |
|---|---|---|---|
| TKL | / | CoAP token length | / |
| Code | / | Function code/Response code | / |
| MessageID | / | Message number: 0 to 65535 | / |
| Token | / | Token specific content | / |
| Option:URI-Host | xxx.xxx.xxx.xxx | Local area network segment, for example, 192.168.1.255 | / |
| | | Option Delta (Option delta): 3 | |
| | | Option Len (Option length): 13 | |
| | | Option Value (Option value): 192.168.1.255 | |
| Option:URI-Path | iotbus_query_master | Message type | / |
| | | Option Delta: 8+3 | |
| | | Option Len: 19 | |
| | | Option Value: iotbus_query_master | |
| Payload | deviceModel | Device model with a maximum of 64 characters | Mandatory |
| | deviceSn | Device ESN code | Mandatory |
| | deviceMac | Device MAC address | Mandatory |
| | deviceIp | Device IP address | Mandatory |
| | | | |
| | devicePriority | Device priority | Optional |
| | | This field is meaningless. When isSupportMaster is 1, a product defines a priority of the product. A general principle is that a smaller value indicates a lower priority. The priority is set in the following manners: | |
| | | 0xAB | |
| | | 0xA: Define level priorities based on the product. It is recommended to set the level priorities at intervals, to reserve a future evolution capability. | |
| | | 0xB: Define a subdivided priority in a level. Whether to set the priority depends on a product plan. | |
| | | A switch is used as an example: | |
| | | SOHO is divided into management levels: S500, S300, and S200. Initial priorities are set as follows: | |
| | | S500: 0x50 | |
| | | S300: 0x30 | |
| | | S200: 0x20 | |
| | | It is assumed that the product is evolved to a next generation, a CPU is greatly enhanced, and the master device is switched to a next-generation device. In this case, a definition is as follows: | |
| | | S520: 0x51 | |
| | | S320: 0x31 | |
| | | S220: 0x21 | |
| | | A priority of S380 is 0x83 | |
| | | When deviceType=0x50 (PHONE), it may be left unfilled | |
| | deviceType | Device type: | Mandatory |
| | | AP: 0x10 | |
| | | LSW: 0x20 | |
| | | WAC: 0x30 | |
| | | AR: 0x40 | |
| | | PHONE: 0x50 | |
| | deviceVendor | Vendor VedorId | Optional |
| | | Huawei: 2011 | |
| | | Huarong: 56813 | |
| | deviceLogo | Huawei: Huawei | Optional |
| | | Huawei data communication smart selection: FutureMatrix | |
| | softwareversion | Software version in a VRCB encoding scheme: | Optional |
| | | V200R021C20B050 | |
| | networkName | Project name: Fill in default by default Reserved field, not currently in use | Optional |
| | isSupportmaster | 0 indicates that a device cannot be used as a master device; and 1 indicates that a device can be used as a master device | Optional |
| | | 1 indicates that a device can be used as a master device | |
| | capability | User-defined field | Optional |

S402: When no response from the master device is received within a timeout period, the network device sets the network device as the master device, where the master device is a management device of a network in which the network device is located.

After the master device starts and joins the network, the master device query message is sent to query whether there is a master device in the network. If there is a master device in the network, a response from the master device is received, and indicates that there is a master device in the network. In this case, election is not performed, and the network device may set an election state to elected (elected). If there is no master device in the network, no response from the master device is received within a timeout period. In this case, election is performed. During a waiting process, an election state is set to electing (electing). Then, the network device sets the network device as the master device, and switch the election state to elected (elected).

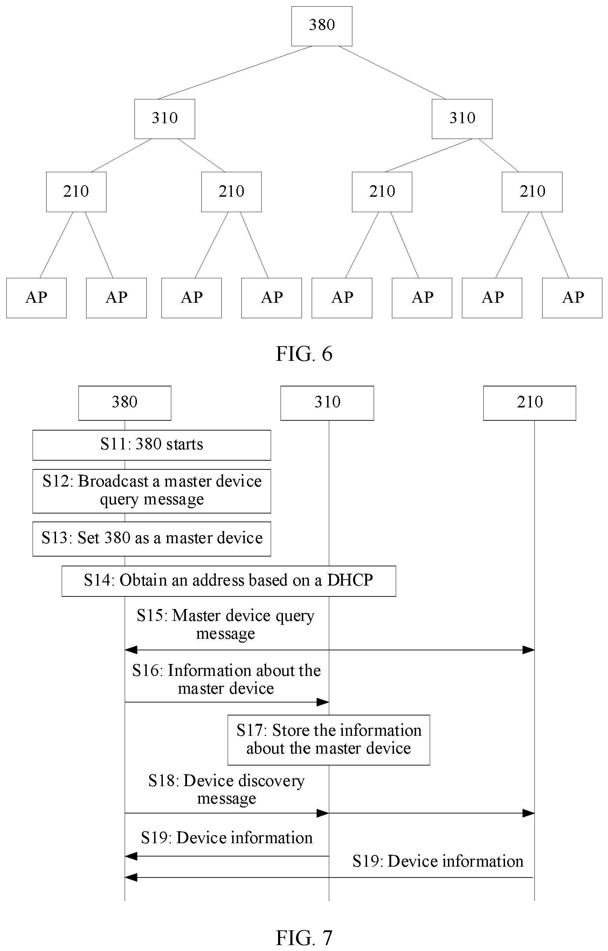

FIG. 6 is a diagram of a network architecture according to an embodiment of this application. As shown in FIG. 6, the network architecture includes a gateway 380, core switches 310, access switches 210, and APs. S380 has an address on vlanif1 by default and is configured with a dynamic host configuration protocol (dynamic host configuration protocol, DHCP) server. 310, 210, and the AP are used as DHCP clients to obtain the address.

380 and 310 can be used as a master device, and 210 and the AP cannot be used as master devices. The devices are sequentially 380, 310, 280, and the AP in descending order of priorities.

FIG. 7 is a flowchart of network provisioning according to an embodiment of this application. FIG. 7 shows a master election process in the network architecture in FIG. 6. The process shown in FIG. 7 is usually performed before the method shown in any one of FIG. 2 to FIG. 4. As shown in FIG. 7, the master election process includes the following steps.

S11: 380 starts, where an election state is idle (idle).

S12: 380 broadcasts a master device query message, where the election state is switched to electing.

380 retransmits the master device query message once every 2s, and retries twice. If no response is returned within a timeout period of 5s, S13 is performed.

S13: 380 sets 380 as a master device, where the election state is switched to elected.

S14: After starting, 310 obtains the address based on a DHCP, where the election state is idle.

S15: 310 broadcasts a master device query message, where the election state is switched to electing.

S16: 380 sends information about the master device to 310, and 310 receives the information about the master device.

The information about the master device may be carried in a CoAP message for sending.

S17: 310 stores the information about the master device, and the election ends, where the election state is switched to elected.

As shown in FIG. 7, processes performed by other 310 are similar. 210 and the AP do not have a master capability, and the master device may query device information of the devices by broadcasting a device discovery message, for example, S18 and S19 in FIG. 7.

Herein, a device sending the device discovery message is 380 instead of the terminal. Therefore, the device discovery message is only used for device discovery, and is not used for backoff state exiting.

S403: The network device sends the information about the master device to the terminal.

The network device sends the information about the master device to the terminal, so that the terminal can associate a management device of an APP with the master device, and subsequently perform network management and configuration through the master device. The information about the master device may include device information of the master device and information indicating that the device is the master device.

S404: When a response from the master device is received, the network device periodically receives a heartbeat message sent by the master device.

The master device periodically sends the heartbeat message. After receiving the heartbeat message, a backup device sends a heartbeat response to maintain a heartbeat connection between the master device and the backup device.

A sending periodicity of the master device may be 3 seconds to 5 seconds, for example, 3 seconds. The backup device feeds back the heartbeat response within 1 second after receiving the heartbeat message.

S405: When no heartbeat message sent by the master device is received within a timeout period, the network device elects a new master device based on a priority of each device in the network.

If the master device is abnormal and the backup device receives no heartbeat message within three periodicities, network re-election is triggered. In this way, the APP of the terminal can automatically connect to the new master device for network management within 10s. This reduces user-sensed interruption time of device management.

An election manner during re-election is not limited in this application. For example, the election manner may be determined through negotiation based on the priority of each network device.

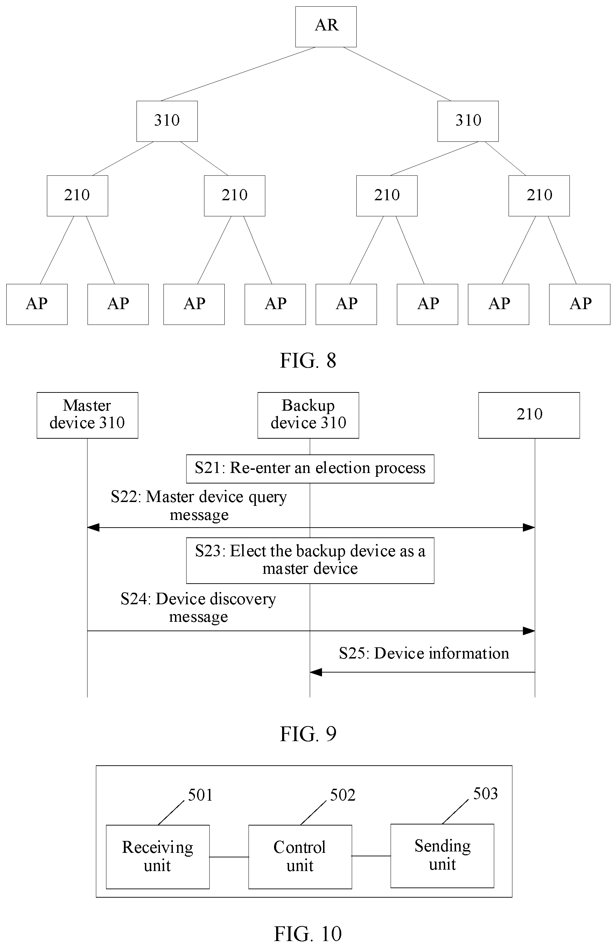

FIG. 8 is a diagram of a network architecture according to an embodiment of this application. As shown in FIG. 8, the network architecture includes a gateway AR, core switches 310, access switches 210, and APs. The AR is configured with a DHCP server, and 310, 210, and the AP are used as DHCP clients to obtain an address.

310 can be used as a master device, and the AR, 210, and the AP cannot be used as master devices. The devices are sequentially the AR, 310, 280, and the AP in descending order of priorities.

FIG. 9 is a flowchart of network provisioning according to an embodiment of this application. FIG. 9 shows a master election process in the network architecture in FIG. 8. The process shown in FIG. 9 may be performed before or after the method shown in any one of FIG. 2 to FIG. 4, or may be performed simultaneously. As shown in FIG. 9, the master election process includes the following steps.

S21: A master device 310 is abnormal, heartbeat detection times out, and a backup device 310 re-enters the election process, where an election state is idle.

S22: The backup device 310 broadcasts a master device query message, where the election state is switched to electing.

The backup device 310 retransmits the master device query message once every 2s, and retries twice. If no response is returned within a timeout period of 5s, S23 is performed.

S23: The backup device 310 sets the backup device 310 as a master device, where the election state is switched to elected.

In an example, if there are a plurality of backup devices 310, when one backup device 310 first sets the backup device 310 as the master device, and receives a master device query message sent by another backup device 310, the backup device 310 may send information about the master device (information about the backup device 310 that sets the backup device 310 as the master device) to the another backup device 310. The backup device 310 that receives the information about the master device stores the information about the master device, and sets the backup device 310 as a backup device. The election process ends. In the foregoing master re-election process, different backup devices 310 enter the election at different time.

In another example, if a plurality of backup devices 310 simultaneously enter the election state, because the backup devices 310 have a same priority, the master device may be determined through negotiation. For example, each backup device 310 learns, by receiving a master device query message from another backup device 310, that there are a plurality of backup devices 310 with a same priority. In this case, none of the backup devices 310 directly sets the backup device 310 as the master device, and the master device may be determined through election negotiation, and other backup devices 310 continue to be used as backup devices.

In another example, if a plurality of backup devices with different priorities simultaneously enter the election state, a device with a highest priority may be elected as the master device. For example, if the backup device 310 receives master device query messages from other backup devices 310, and learns that priorities of the other backup devices are lower than that of the backup device 310, the backup device 310 directly sets the backup device 310 as the master device, then responds to the master device query messages from the other devices, and sends information about the master device (information about the backup device 310 that sets the backup device 310 as the master device) to the other backup devices 310. The backup devices 310 that receive the information about the master device store the information of the master device, and set the backup devices 310 as backup devices. The election process ends.

As shown in FIG. 9, 210 and the AP do not have a master capability, and the master device may query device information of the devices by broadcasting a device discovery message, for example, S24 and S25 in FIG. 9.

In this implementation, the master device and another device are maintained by using the heartbeat message. When no heartbeat message is received within a timeout period, it indicates that the master device may be faulty. In this case, the new master device is elected without manual specifying, to improve user experience.

This embodiment of this application provides a CoAP soft bus-based master device election solution. A new CoAP message for querying a master device is introduced, so that a master device in a network can be quickly discovered. After the network is abnormal or the master device is faulty, smooth switching of management of devices in the entire device is implemented, to improve user experience. The master device is elected based on a CoAP soft bus, so that rapid sensing and management capabilities for network expansion and device faults are implemented.

FIG. 10 is a block diagram of a network provisioning apparatus according to an embodiment of this application. The network provisioning apparatus may be implemented as all or a part of a network device by using software, hardware, or a combination of software and hardware. The network provisioning apparatus may include a receiving unit 501, a control unit 502, and a sending unit 503.

The receiving unit 501 is configured to receive a device discovery message sent by a terminal, where the device discovery message indicates the network device to exit a backoff state.

The control unit 502 is configured to: when a state of the network device is the backoff state, control, based on the device discovery message, the network device to exit the backoff state.

The sending unit 503 is configured to send device information of the network device to the terminal, and send registration information to a cloud.

Optionally, the device discovery message is a constrained application protocol CoAP message, the CoAP message includes a device type, and the device type is a type of the terminal.

The CoAP message whose device type is the type of the terminal indicates the network device to exit the backoff state.

Optionally, the control unit 502 is further configured to: when the state of the network device is a non-backoff state, update backoff duration in the backoff state, to shorten the backoff duration when the network device enters the backoff state next time.

Optionally, the sending unit 503 is further configured to broadcast a master device query message.

The control unit 502 is further configured to: when no response from a master device is received within a timeout period, set the network device as a master device, where the master device is a management device of a network in which the network device is located.

The sending unit 503 is further configured to send information about the master device to the terminal.

Optionally, the master device query message is a CoAP message, the master device query message includes device priority information, and the device priority information is used for master device election.

Optionally, the receiving unit 501 is further configured to: when a response from the master device is received, periodically receive a heartbeat message sent by the master device; and
the control unit 502 is further configured to: when no heartbeat message sent by the master device is received within a timeout period, elect a new master device based on a priority of each device in the network.

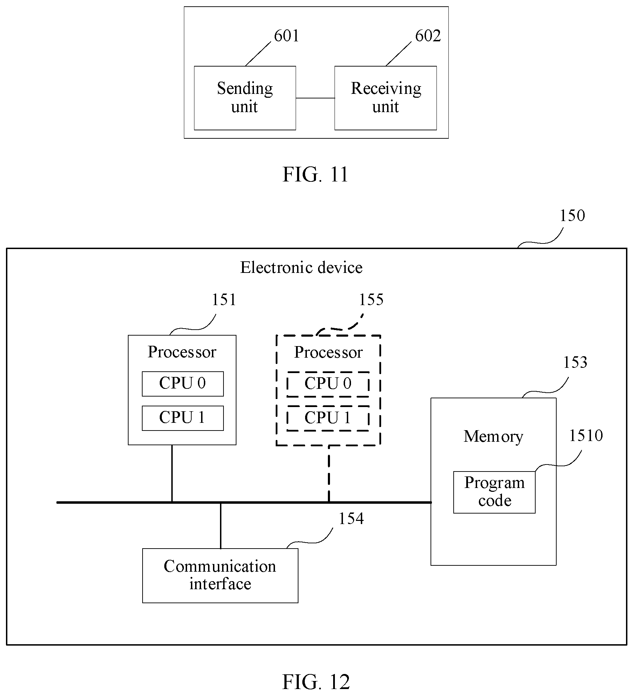

FIG. 11 is a block diagram of a network provisioning apparatus according to an embodiment of this application. The network provisioning apparatus may be implemented as all or part of a terminal by using software, hardware, or a combination of software and hardware. The network provisioning apparatus may include a sending unit 601 and a receiving unit 602.

The sending unit 601 is configured to broadcast a device discovery message, where the device discovery message indicates a network device to exit a backoff state.

The receiving unit 602 is configured to receive device information of the network device sent by the network device.

Optionally, the device discovery message is a constrained application protocol CoAP message, the CoAP message includes a device type, and the device type is a type of the terminal.

The CoAP message whose device type is the type of the terminal indicates the network device to exit the backoff state.

Optionally, the device discovery message further indicates the network device to update backoff duration in the backoff state when a state of the network device is a non-backoff state, to shorten the backoff duration when the network device enters the backoff state next time.

It should be noted that, when the network provisioning apparatus provided in the foregoing embodiments performs network provisioning, only division of the foregoing functional units is described by using examples. During actual application, the foregoing functions may be allocated to different functional units as required for implementation. In other words, an internal structure of the device is divided into different functional units to complete all or some of the functions described above. In addition, the network provisioning apparatus provided in the foregoing embodiments and the network provisioning method embodiments belong to the same concept. For a specific implementation process, refer to the method embodiments. Details are not described herein again.

An embodiment of this application further provides a communication system. The communication system includes the network provisioning apparatuses shown in FIG. 10 and FIG. 11.

FIG. 12 is a diagram of a structure of an electronic device 150 according to an embodiment of this application. The electronic device 150 shown in FIG. 12 is configured to perform operations related to the network provisioning method shown in any one of FIG. 2 to FIG. 9. The electronic device 150 may be the foregoing network device or terminal. The electronic device 150 may be implemented by using a general bus architecture.

As shown in FIG. 12, the electronic device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (data processing unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor 151 may implement or execute various logical blocks, modules, and circuits described with reference to content disclosed in embodiments of this application. Alternatively, the processor may be a combination of processors implementing a computing function, for example, a combination including one or more microprocessors, or a combination of the DSP and the microprocessor.

Optionally, the electronic device 150 further includes a bus. The bus is configured to transfer information between components of the electronic device 150. The bus may be a peripheral component interconnect (peripheral component interconnect, PCI for short) bus, an extended industry standard architecture (extended industry standard architecture, EISA for short) bus, or the like. The bus may include an address bus, a data bus, a control bus, and the like. For ease of representation, only one bold line is used for representation in FIG. 12, but this does not mean that there is only one bus or only one type of bus.

The memory 153 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store desired program code in a form of an instruction or a data structure and that can be accessed by a computer, but is not limited thereto. For example, the memory 153 exists independently, and is connected to the processor 151 through the bus. The memory 153 may alternatively be integrated with the processor 151.

The communication interface 154 uses any apparatus like a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 154 may be used by the electronic device 150 to communicate with another device.

During specific implementation, in an embodiment, the processor 151 may include one or more CPUs, for example, a CPU 0 and a CPU 1 shown in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the electronic device 150 may include a plurality of processors, for example, the processor 151 and a processor 155 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the electronic device 150 may further include an output device and an input device. The output device communicates with the processor 151, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 151, and may receive an input from a user in a plurality of manners. For example, the input device may be a mouse, a keyboard, a touchscreen device, or a sensor device.

In some embodiments, the memory 153 is configured to store program code 1510 for executing the solutions of this application, and the processor 151 may execute the program code 1510 stored in the memory 153. In other words, the electronic device 150 may execute, by using the processor 151, the program code 1510 in the memory 153, to implement the network provisioning method provided in method embodiments. The program code 1510 may include one or more software modules. Optionally, the processor 151 may also store program code or instructions for executing the solutions of this application.

In a specific embodiment, the electronic device 150 in this embodiment of this application may correspond to a controller in the foregoing method embodiments. The processor 151 in the electronic device 150 reads instructions in the memory 153, so that the electronic device 150 shown in FIG. 12 can perform all or some operations performed by the controller.

Specifically, the processor 151 is configured to: receive a device discovery message sent by a terminal, where the device discovery message indicates a network device to exit a backoff state; when a state of the network device is the backoff state, control, based on the device discovery message, the network device to exit the backoff state; send device information of the network device to the terminal; and send registration information to a cloud.

Alternatively, the processor 151 is configured to: broadcast a device discovery message, where the device discovery message indicates a network device to exit a backoff state; and receive device information of the network device sent by the network device.

For brevity, another optional implementation is not described herein again.

The steps of the network provisioning method shown in any one of FIG. 2 to FIG. 9 are completed by using an integrated logic circuit of hardware in the processor of the electronic device 150 or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps of the foregoing methods in combination with hardware of the processor. To avoid repetition, details are not described herein again.

An embodiment of this application further provides a chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing network provisioning methods.

It should be understood that the foregoing processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an ARM architecture.

Further, in an optional embodiment, there are one or more processors and there are one or more memories. Optionally, the memory may be integrated with the processor, or the memory and the processor are disposed separately. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both the volatile memory and the non-volatile memory. The non-volatile memory may be a ROM, a PROM, an EPROM, an EEPROM, or a flash memory. The volatile memory may be a RAM, and is used as an external cache. Through an example rather than limitative description, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by an electronic device, the electronic device is caused to perform the network provisioning method provided above.

An embodiment of this application further provides a computer program product including instructions. When the computer program product runs on an electronic device, the electronic device is caused to perform the network provisioning method provided above.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the processes or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk)), or the like.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit a protection scope of this application. Any of variation or replacement readily figured out by a person skilled in the art within the technical scope disclosed in this application shall fall within the protection scope of this application. Therefore, the protection scope of this application shall be subject to the protection scope of the claims.

Unless otherwise defined, technical terms or scientific terms used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and the equivalents listed after the "include" or "comprise", and other elements or objects are not excluded.

The foregoing descriptions are merely an embodiment of this application, but are not intended to limit this application. Any modification, equivalent replacement, improvement, or the like made within the spirit and principle of this application shall fall within the protection scope of this application.

## Claims

1. A network provisioning method, wherein the method comprises:
receiving, by a network device, a device discovery message sent by a terminal, wherein the device discovery message indicates the network device to exit a backoff state;
when a state of the network device is the backoff state, exiting, by the network device, the backoff state based on the device discovery message;
sending, by the network device, device information of the network device to the terminal; and
sending, by the network device, registration information to a cloud.

2. The method according to claim 1, wherein the device discovery message is a constrained application protocol CoAP message, the CoAP message comprises a device type, and the device type is a type of the terminal; and
the CoAP message whose device type is the type of the terminal indicates the network device to exit the backoff state.

3. The method according to claim 1 or 2, wherein the method further comprises:
when the state of the network device is a non-backoff state, updating, by the network device, backoff duration in the backoff state, to shorten the backoff duration when the network device enters the backoff state next time.

4. The method according to any one of claims 1 to 3, wherein the method further comprises:
broadcasting, by the network device, a master device query message;
when no response from a master device is received within a timeout period, setting, by the network device, the network device as the master device, wherein the master device is a management device of a network in which the network device is located; and
sending, by the network device, information about the master device to the terminal.

5. The method according to claim 4, wherein the master device query message is a CoAP message, the master device query message comprises device priority information, and the device priority information is used for master device election.

6. The method according to claim 4 or 5, wherein the method further comprises:
when a response from the master device is received, periodically receiving, by the network device, a heartbeat message sent by the master device; and
when no heartbeat message sent by the master device is received within a timeout period, electing, by the network device, a new master device based on a priority of each device in the network.

7. A network provisioning method, wherein the method comprises:
broadcasting, by a terminal, a device discovery message, wherein the device discovery message indicates a network device to exit a backoff state; and
receiving, by the terminal, device information of the network device sent by the network device.

8. The method according to claim 7, wherein the device discovery message is a constrained application protocol CoAP message, the CoAP message comprises a device type, and the device type is a type of the terminal; and
the CoAP message whose device type is the type of the terminal indicates the network device to exit the backoff state.

9. The method according to claim 7 or 8, wherein the device discovery message further indicates the network device to update backoff duration in the backoff state when a state of the network device is a non-backoff state, to shorten the backoff duration when the network device enters the backoff state next time.

10. A network provisioning apparatus, wherein the apparatus comprises:
a receiving unit, configured to receive a device discovery message sent by a terminal, wherein the device discovery message indicates the network device to exit a backoff state;
a control unit, configured to: when a state of the network device is the backoff state, control, based on the device discovery message, the network device to exit the backoff state; and
a sending unit, configured to send device information of the network device to the terminal, and send registration information to a cloud.

11. A network provisioning apparatus, wherein the apparatus comprises:
a sending unit, configured to broadcast a device discovery message, wherein the device discovery message indicates a network device to exit a backoff state; and
a receiving unit, configured to receive device information of the network device sent by the network device.

12. A network device, wherein the network device comprises a processor and a memory, the memory is configured to store a software program, and the processor runs or executes the software program stored in the memory, to cause the network device to implement the method according to any one of claims 1 to 6.

13. A terminal, wherein the terminal comprises a processor and a memory, the memory is configured to store a software program, and the processor runs or executes the software program stored in the memory, to cause the terminal to implement the method according to any one of claims 7 to 9.

14. A computer-readable storage medium, wherein the computer-readable storage medium is configured to store program code executed by a processor, and the program code comprises instructions used to implement the method according to any one of claims 1 to 9.

15. A computer program product, comprising program code, wherein when a computer runs the computer program product, the computer is caused to perform the method according to any one of claims 1 to 9.
